(19)

Europäisches
Patentamt

European
Patent Office

Office européen
des brevets

(11) **EP 4 580 892 B1**

(12) **EUROPEAN PATENT SPECIFICATION**

(45) Date of publication and mention
of the grant of the patent:
**05.08.2026 Bulletin 2026/32**

(21) Application number: **23767814.9**

(22) Date of filing: **31.08.2023**

(51) International Patent Classification (IPC):
***B60C 11/24*** *(2006.01)*

(52) Cooperative Patent Classification (CPC):
**B60C 11/246**

(86) International application number:
**PCT/EP2023/073867**

(87) International publication number:
**WO 2024/047145 (07.03.2024 Gazette 2024/10)**

(54) **ESTIMATION OF TREAD WEAR OF TIRES**

SCHÄTZUNG DES LAUFFLÄCHENVERSCHLEISSES VON REIFEN

ESTIMATION DE L'USURE DE LA BANDE DE ROULEMENT DE PNEUS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.09.2022 DE 102022122272**

(43) Date of publication of application:
**09.07.2025 Bulletin 2025/28**

(73) Proprietor: **Nira Dynamics AB
58330 Linköping (SE)**

(72) Inventors:
• **WIDMARK, Mats
58216 Linköping (SE)**
• **JOHANSSON, Robert
58665 Linköping (SE)**

(74) Representative: **Samson & Partner Patentanwälte
mbB
Widenmayerstraße 6
80538 München (DE)**

(56) References cited:
EP-A1- 3 483 582      DE-A1- 10 306 498
DE-A1- 102015 208 270      US-A1- 2016 247 329

## Description

## Technical field

The present invention generally relates to estimating tread wear of tires on wheels of a vehicle.

## Background of the invention

For purposes of increased driving comfort and safety, the vast majority of vehicles use pneumatic rubber tires. The tires' contact area with the grounds is not flat or planar, but features a tread pattern. The tread pattern serves to provide reliable grip on varying surfaces, and reduce the risk of unwanted behavior such as aquaplaning.

The reliability of the tread pattern's function depends on the depth of a tire tread pattern. During the lifetime of the tire, tread is increasingly worn down. In light of the tread pattern's importance for safety, there are requirements (e.g., mandated by law) for it to be kept above a certain level. Tires must be replaced before the tread pattern is fully worn off.

Thus, there is a need for apparatus and method for monitoring tread depth. Currently, many systems rely on a manual or visual inspection which is often left to the vehicle's driver or operator. Such approaches are error-prone as they rely on the driver remembering to check the tread regularly and as they rely on subjective impressions by the sometimes inexperienced operator.

Thus, apparatus and methods automatically providing objective information about the tires' tread depth may increase safety and may support planning of maintenance.

DE 10 2015 208270 A1 relates to methods for determining tread wear of vehicle tires and discloses subject-matter according to the preamble of claim 1.

## Summary of the invention

Methods, apparatuses and computer program products are disclosed. To address the shortcomings of the type mentioned above, the present invention provides for methods, apparatuses and computer program products according to the independent claims. The dependent claims set out preferred embodiments.

In a first aspect, a method for estimating tread wear of tires on wheels of a vehicle is provided. The tread wear is indicative of the difference between a starting tread depth and a current tread depth. The method comprises a step of obtaining a first angular velocity sensor signal, indicative of an angular velocity of at least one first wheel or a first axle of the vehicle, and a step of obtaining a second angular velocity sensor signal, indicative of an angular velocity of at least one second wheel or a second axle of the vehicle.

The method further comprises a step of determining, based on the obtained first and second angular velocity sensor signals, a tread wear difference value, which is indicative of the difference in tread wear between the tires at the first and second wheels or axles. It further comprises a step of estimating, based on the determined tread wear difference value and based on a estimation relationship, a first tread wear estimate for the first wheel or axle.

In some embodiments, the determining may be based on a comparison of the first and second angular velocity sensor signals, optionally corrected for slip at driven wheels or axles.

In particular, the determining may be based on a formula corresponding to:

$$R\frac{\omega_2 - \omega_1}{(\omega_2 + \omega_1)/2} = K(d_2 - d_1)$$

wherein $d_1$ denotes a first tire tread depth, $d_2$ denotes a second tire tread depth, $\omega_1$ denotes a first angular velocity, $\omega_2$ denotes a second angular velocity, $R$ denotes a default rolling radius, and $K$ denotes a proportionality constant.

In some embodiments, the estimation relationship may be a linear relationship.

For instance, the estimating may be based on a relationship corresponding to:

$$C = \frac{d_1}{d_2}$$

wherein $d_1$ denotes a first tire tread depth, $d_2$ denotes a second tire tread depth, and $C$ denotes a linearity constant, which is different from 1.

In some embodiments, the estimation relationship may be based on one or more of the following: expected or actual vehicle load, expected or actual vehicle type, drive type. Additionally, or alternatively, it may be based on expected or actual vehicle acceleration.

In some embodiments, the determining and/or the estimating may not require using a velocity signal indicative of an absolute speed of the vehicle. Additionally, or alternatively, the determining and/or the estimating may not require using a location signal indicative of a location of the vehicle. Furthermore, the determining and/or the estimating may not require determining an absolute rolling radius.

In some embodiments, the estimating may further comprise a step of estimating, based on the determined tread wear difference value and based on a estimation relationship, a second tread wear estimate for the second wheel or axle.

In some embodiments, the at least one first wheel may be or comprise wheels at a driven axle of the vehicle. Additionally, or alternatively, the at least one second wheel may be or comprise wheels at a non-driven axle of the vehicle.

Hence, the teaching of the present disclosure may be applied to a comparison of a driven axle (or all driven wheels) driven with a non-driven axle (or all non-driven wheels). Alternatively, it may be applied to a comparison of one driven wheel with one non-driven wheel. In other alternatives, the afore-mentioned approaches may be combined, e.g., by comparing one driven wheel to multiple (or all) non-driven wheels.

For instance, the vehicle may be a (predominantly) rear-wheel driven vehicle or a front-wheel driven vehicle.

In some embodiments, the method may further comprise a step of outputting a tread wear alarm in response to the estimating.

In some embodiments, the estimating may comprise a statistical regression analysis, including a recursive estimation such as a Kalman filter, or a batch analysis such as a least-squares-fit of a relationship between the measured signals.

In some embodiments, the method may further comprise a step of adjusting the estimated tread wear estimate based on an expected tire growth.

For instance, the adjusting may be based on a growth model. An example of a growth model may have a first phase of a first duration with a first growth rate and a second phase of a second duration with a second growth rate, wherein the second growth rate is smaller than the first growth rate and/or converging to zero growth.

In particular, the growth model may be based on one or more of the following: driven distance; tire age; forces exerted on the tires.

In a second aspect, a computer program product is provided, which includes program code configured to, when executed in a computing device, to carry out the steps of a method according to the first aspect.

In a third aspect, an apparatus for estimating tread wear of tires on wheels of a vehicle is provided. The apparatus comprises a processing part configured to carry out the steps of a method according to the first aspect.

In a fourth aspect, a system is provided, with an apparatus according to the third aspect and with at least two angular velocity sensors configured to supply angular velocity sensor signals.

## Short description of the drawings

The following detailed description refers to the appended drawings, wherein:

Fig. 1    schematically illustrates a flowchart of a method according to an embodiment.

Fig. 2A   illustrates a top view of a vehicle according to embodiment.

Fig. 2B   illustrates a side view of the vehicle according to the embodiment.

Fig. 3    illustrates a wheel with a tire with tread wear.

Fig. 4    illustrates a graph of tread depth as a function of distance driven.

Fig. 5    shows a graph with experimental data of the relationship between tread wear on a front axle versus tread wear on rear axle.

Fig. 6    shows a graph of a model according to embodiments.

Fig. 7    shows an apparatus according to an embodiment.

## Detailed description of embodiments

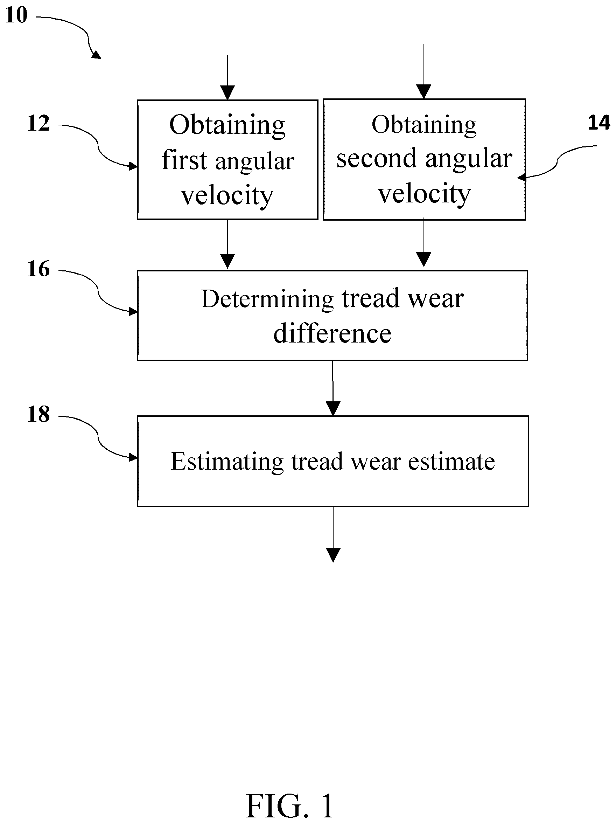

Fig. 1 schematically illustrates a flowchart of a method 10 according to an embodiment.

The method 10 is for estimating tread wear of tires on wheels of a vehicle. The tread wear is indicative of the difference between a starting tread depth and a current tread depth. Method 10 comprises a step 12 of obtaining a first angular velocity sensor signal, indicative of an angular velocity of at least one first wheel or a first axle of the vehicle, and a step 14 of obtaining a second angular velocity sensor signal, indicative of an angular velocity of at least one second wheel or a second axle of the vehicle. Non-limiting examples of the angular velocity sensors include the toothed wheel-type sensors used, for instance, in ABS (anti-lock braking system) and which provide a quasi-continuous stream of angular velocity data. Such angular velocity sensors are configured to provide angular velocity signals (e.g. in units of revolutions per second).

More specifically, the at least one first wheel may be or comprise wheels at a driven axle of the vehicle, whereas the at least one second wheel may be or comprise wheels at a non-driven axle of the vehicle. For instance, the vehicle may be a (predominantly) rear-wheel driven vehicle or a (predominantly) front-wheel driven vehicle.

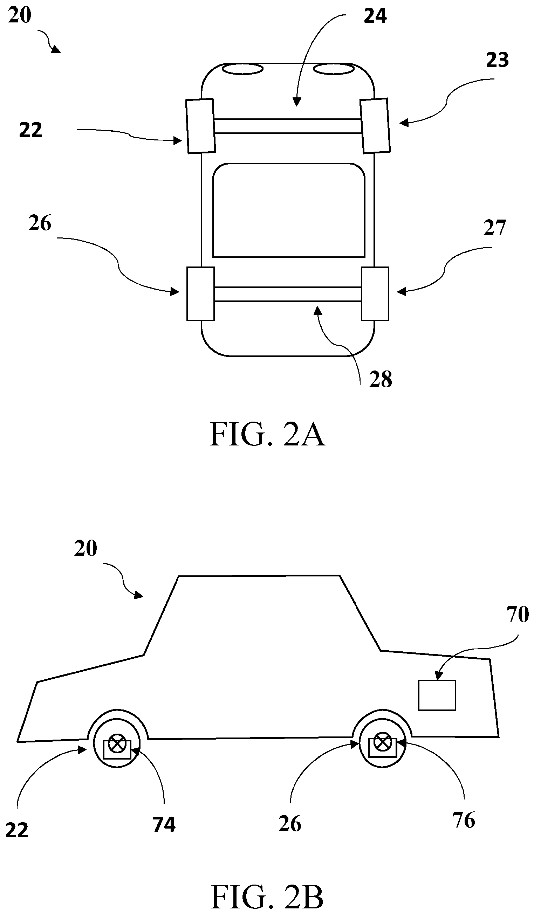

Fig. 2A illustrates a top view of a vehicle 20 according to embodiment. Vehicle 20 has a front axle 24 with a front left wheel 22 and a front right wheel 23. The vehicle 20 further has a rear axle 28 with a left rear wheel 26 and a right rear wheel 27.

The example shown is a front-wheel driven vehicle, wherein the front axle 24 is the driven axle. However, the present disclosure is also applicable to rear-wheel driven vehicles or even to four-wheel-drive vehicles with variable drive (e.g., where one axle is driven predominantly and the other axle is driven only momentarily, e.g., during acceleration or low-grip situations). In the following, a description is given where the first wheel/-axle is driven, whereas the second wheel/axle is not (or at least not always) driven.

In some embodiments of the present disclosure, a tread wear difference between the front axle and the rear axle may be determined. In such examples, the front axle (both front wheels 22 and 23) may be used to obtain a first angular velocity step 12 in Fig. 1. The rear axle both rear wheels 26 and 27 may be used to obtain the second angular velocity step 14 in Fig. 1. For instance, to obtain an axle angular velocity, a mean or effective angular velocity may be computed based on the corresponding wheel angular velocities of that axle. Alternatively, an axle angular velocity may be measured at the axle directly.

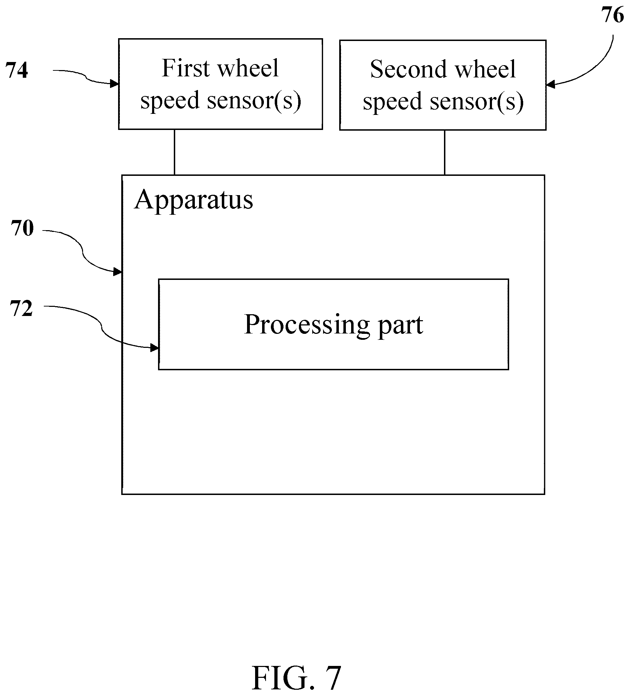

In other examples of the present disclosure, a tread wear difference between only one front wheel (for instance front left wheel 22) and only one rear wheel (for instance rear left wheel 26) may be determined. In such examples, the angular velocity signal from the one front wheel (left front wheel 22) is used as the first angular velocity (step 12 in Fig. 1) and the angular velocity signal from the one rear wheel (left rear wheel 26) is used as the second angular velocity (step 20 step 14 in Fig. 1). For instance, **Fig. 2B** illustrates a side view of the vehicle according to the embodiment, wherein front wheel 22 is equipped with a front wheel speed sensor 74 and rear wheel 26 is equipped with a rear wheel speed sensor 76. Both wheel speed sensors provide their signals to a central processing unit 70 (which may be in the car or elsewhere), as will be explained in further detail with reference to Fig. 7 further below.

Returning to Fig. 1, method 10 further comprises a step 16 of determining, based on the obtained first and second angular velocity sensor signals, a tread wear difference value, which is indicative of the difference in tread wear between the tires at the first and second wheels or axles.

The determining 16 takes as an input the first and second angular velocity sensor signals, and uses them in a computation to determine a tread wear difference value. Optionally, the velocity signals may have been corrected for slip at driven wheels or axles.

More specifically, using a first angular velocity $\omega_1$ and a second angular velocity $\omega_2$, the determining 16 may be based on the formula:

$$R \frac{\omega_2 - \omega_1}{(\omega_2 + \omega_1)/2} = K(d_2 - d_1)$$

Alternatively, an equivalent formula may be used. In the formula above, $d_1$ denotes the tire tread depth of the first wheel or axle, whereas and $d_2$ denotes the tire tread depth of the second wheel or axle, such that $(d_2 - d_1)$ is a tread wear difference value. $R$ denotes a default rolling radius, and $K$ denotes a proportionality constant.

As explained above, in embodiments where the first angular velocity relates to a first axle (for instance front axle 24 of Fig. 2A) and the second angular velocity relates to a second axle (for instance rear axle 28 of Fig. 2A), the tire tread depths and the tread wear difference value may be computed on an axle-wise level.

In other embodiments whether first regular velocity relates to a first wheel (for instance front wheel 22 of Fig. 2B) the second angular velocity relates to a second wheel (for instance rear wheel 26 of Fig. 2B), the tire trip depths and the tread were difference value may be computed on a wheel-wise level.

Returning to Fig. 1, method 10 further comprises a step 18 of estimating, based on the determined tread wear difference value and based on a estimation relationship, a first tread wear estimate for the first wheel or axle.

In particular, the estimation relationship to be used may preferably be a linear relationship. For instance, the estimating 18 can be based on the relationship:

$$C = \frac{d_1}{d_2}$$

wherein $d_1$ denotes a first tire tread depth, $d_2$ denotes a second tire tread depth, and $C$ denotes a linearity constant. The inventors have recognized that the wear on the first wheel or axle (e.g., on driven wheels or axles) is approximately proportional to the wear on the second wheel or axle (e.g., on non-driven wheels or axles). The linearity constant C is the proportionality factor between both values. In some embodiments, the linear relationship may further include an offset.

The linearity constant is different from 1, as the wear on the first wheel/axle and the second wheel/axle is not identical. Instead, they present a tread wear difference. With a linearity constant of 1, no tread wear difference would be observed and a tread wear difference could not be used to deduce the actual first/second tread wear estimate.

The estimating 18 may use statistical regression analysis (including a recursive estimation such as a Kalman filter), or a batch analysis (such as a least-squares-fit of a relationship between the measured signals) in order to link the estimation relationship and the actual tread depth.

The estimation relationship mentioned above (and the value of the linearity constant) may be (pre)determined based on characteristics such as (expected or actual) vehicle load, (expected or actual) vehicle type, drive type. For instance, vehicle load and/or vehicle type may influence the weight distribution between the wheels/axles and thus have an effect on the wear. For instance, if the weight is distributed predominantly towards the driven axle, then the wear will be more pronounced on the driven axle. Similarly, an active or sportive drive type will incur a faster wear on the driven axle/wheels than for instance a comfortable drive type.

Additionally, or alternatively, the estimation relationship may be based on (expected or actual) vehicle acceleration. Cumulating or averaging the vehicle acceleration allows to infer how "dynamic" the driving behavior is and whether the amount of acceleration increases the wear on a particular axle/wheel.

More generally, by monitoring and cumulating the forces (acceleration, load, etc.) on the tires, a more reliable estimate of the tread wear rate can be obtained. In the context of the present disclosure, such cumulated measurments may be used to continuously adapt the estimation relationship. To this end, the method according to the present disclosure may further take into account acceleration data provided by (lateral and/or longitudinal) acceleration sensors of the vehicle, engine drive torque data provided by the electronic control unit, pressure data provided by the (hydraulic) brake system, and/or load data provided by axle height sensors of the vehicle. One or more of these data sources may be cumulated (with corresponding linearity factors) to obtain a more reliable estimate of the estimation relationship. As such, the estimation relationship does not need to be static, but may evolve depending on the actual forces experienced by the tires.

As can be seen from the above examples, the relationship (and/or the value of the constant) used in the estimating step 18 may be predetermined in the sense of being predefined for the entire lifetime of the vehicle based on the known or expected characteristics. In other examples, it may be (pre)determined and dynamically adjusted based on the actually measured characteristics during the operation of the vehicle.

In some embodiments, the determining step 16 and/or the estimating step 18 may not require using a velocity signal indicative of an absolute speed of the vehicle. Additionally, or alternatively, the determining and/or the estimating may not require using a location signal indicative of a location of the vehicle. This allows for the teaching to be implemented even in vehicles with limited sensor capability (or in areas with low GPS accuracy) or serve as an accuracy-increasing complement to other methods that make use of absolute speed.

Furthermore, the determining and/or the estimating may not require determining an absolute rolling radius. This allows to reduce the processing needed for the implementation.

In the example shown, the estimating step 18 is directed towards estimating the tread of the first wheel or axle (e.g., the driven wheel or axle). Optionally, it may further comprise estimating a second tread wear estimate for the second wheel or axle, i.e., the other (e.g., non-driven) axle. This estimating may also be based on the determined tread wear difference value and on the estimation relationship.

Hence, the teaching of the present disclosure may be applied to a comparison of a driven axle (or all driven wheels) with a non-driven axle (or all non-driven wheels). Alternatively, it may be applied to a comparison of one driven wheel with one non-driven wheel. In other alternatives, the afore-mentioned approaches may be combined, e.g., by comparing one driven wheel to multiple (or all) non-driven wheels.

Returning to the description of Fig. 1, method 10 may optionally comprise a further step (not illustrated) of outputting a tread wear alarm in response to the estimating. Such tread wear alarm may be outputted for instance when the first (and/or second) tread wear estimate exceeds a predetermined threshold. Such threshold may be expressed in absolute or relative values. An example of an absolute tread wear value may be any value exceeding 2 mm, more preferably exceeding 5 mm. An example of a relative tread wear value may be any value exceeding 50%, more preferably exceeding 70% of the starting tread depth.

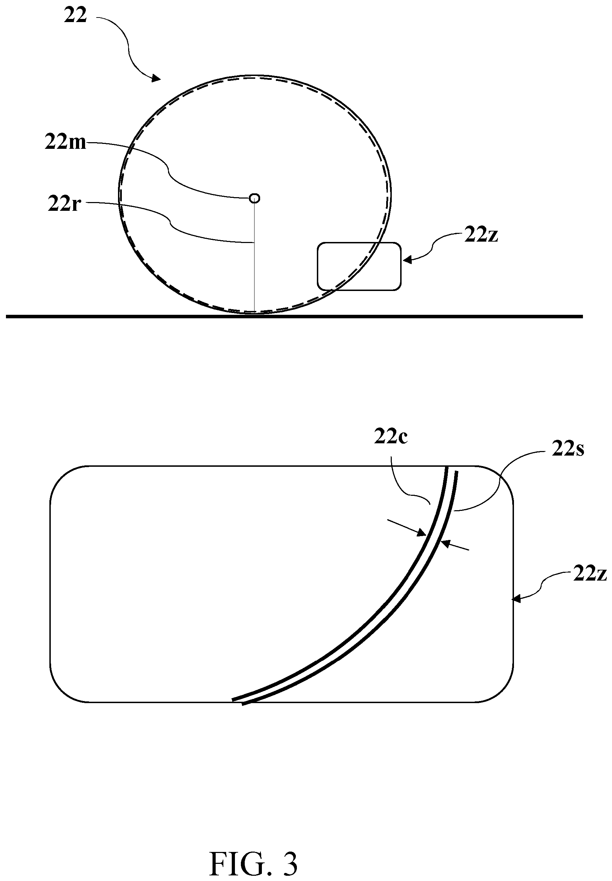

**Fig. 3** illustrates wheel 22 with a tire with tread wear. The wheel 22 features a center 22m and a default rolling radius 22r. The tread wear of the wheel 22 is illustrated in reference to the inset portion 22z. As can be seen from inset 22z, a starting tread depth is illustrated with reference numeral 22s whereas the current tread depth is illustrated with reference numeral 22c. The current tread depth 22c is located closer to the center of the wheel 22 than the starting tread depth 22s. The difference between the starting tread depth 22s and the current tread depth 22c is designated by two arrows and is referred to as tread wear throughout the present disclosure.

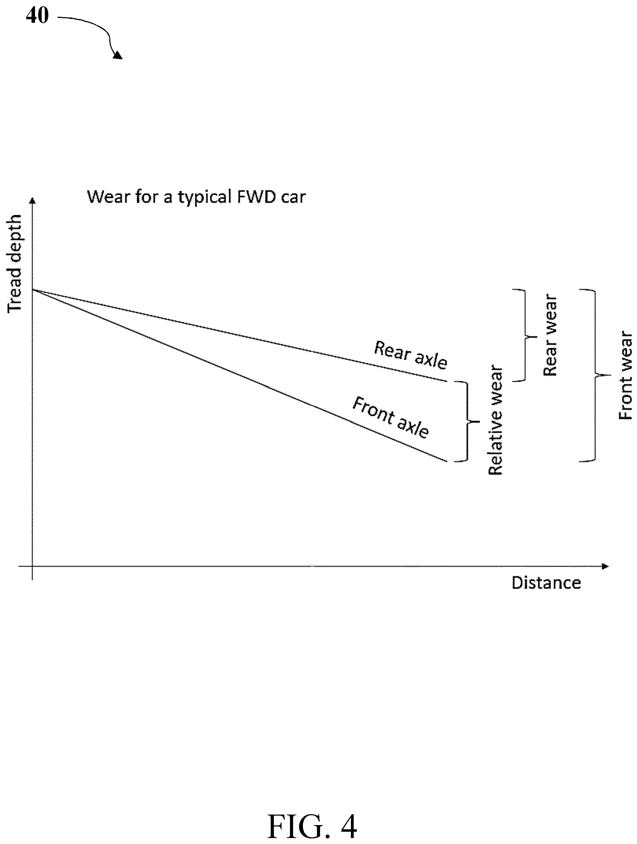

**Fig. 4** illustrates a schematic graph of tread depth as a function of distance driven. For illustration purposes, Fig. 4 shows wear for a front-wheel-driven vehicle as it can be experienced as a function of distance driven. It schematically shows the evolution of tread depth for a rear axle and for a front axle. In this example, the front axle is the driven axle and the rear axle is the non-driven axle. As can be seen from Fig. 4, the non-driven (rear) axles wears more slowly than the driven (front) axle. The rear axle wear increases more slowly than the front axle wear. The relative wear is defined as the difference between the front wear and the rear wear. Fig. 4 also confirms that the rear wear is proportional to the front wear. In other words, by knowing the proportionality factor between the rear and front wear and by knowing the amount of relative wear, one can deduce the absolute front wear (and rear wear).

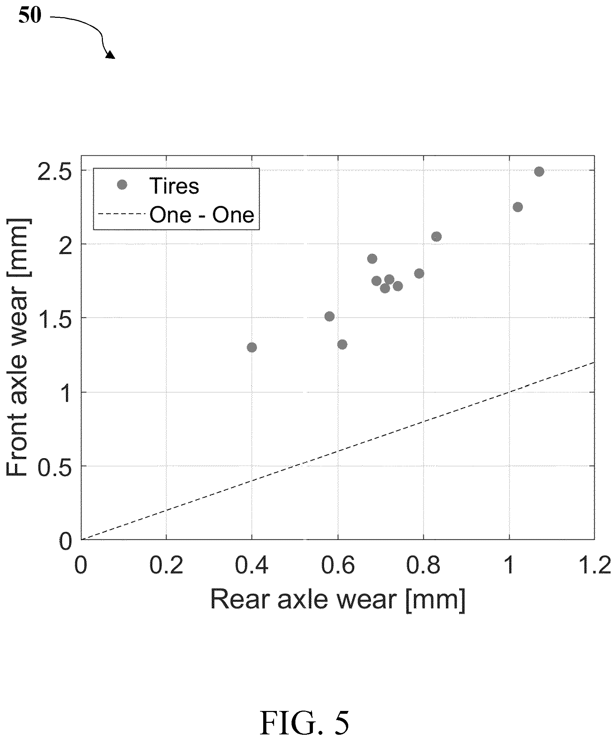

**Fig. 5** shows a graph 50 with experimental data of the relationship between tread wear on a front axle versus tread wear on rear axle.

Fig. 5 confirms that all data points follow approximately a linear trend which relates the front axle wear to the rear axle wear. By virtue of, for instance, a regression analysis, the proportionality constant linking the front axle wear and the rear axle wear can be determined. It can also be seen that the proportionality constant is different from 1. In the example shown the front axle wears more rapidly than the rear axle, since it is the (predominantly) driven axle. A proportionality constant of 1 would correspond to the dashed line (no tread wear difference). Having determined the proportionality constant (being different from 1), one can deduce the absolute (front and/or rear) axle wear based on the tread wear difference. In the example shown, the proportionality constant has a value of approximately 2.1, which means that the front axle wears approximately twice as fast as the rear axle. Typical proportionality constants (in the case of a vehicle where the axle corresponding to the y axis is the predominantly driven axle) may be comprised in the range from 1.1 to 10, more preferably between 1.5 and 2 . In the case of a vehicle where the axle corresponding to the x axis is the predominantly driven axle, the typical proportionality constants would correspond to the inverse of the values given above.

In the example shown the linear trend relating the front axle wear and rear axle wear passes through the origin, which means that no offset needs to be accounted for. In other examples, the linear trend may include a (small) offset.

In other examples (not shown), the data points may lie below the dashed line, which would mean that the rear axle wear faster than the front axle. This may be the case in (predominantly) rear-wheel-driven vehicles.

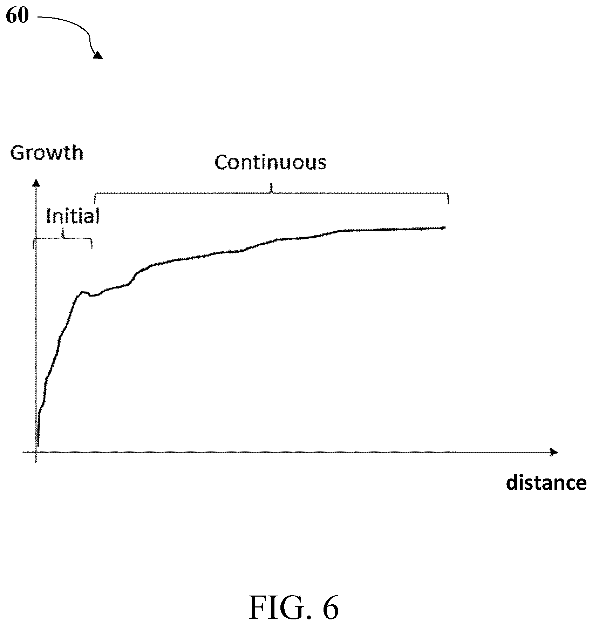

Fig. 6 shows a graph 60 of a tire growth model, which may be used for adjusting the tread wear estimate based on an expected tire growth, according to embodiments.

The growth model describes the tire expansion as a function of time or of distance driven. In the example shown, it has a first phase of a first duration/distance with a first growth rate and a second phase of a second duration/distance with a second growth rate. The first phase is labelled "initial" in Fig. 6, whereas the second phase is labelled "continuous" in Fig. 6. The second growth rate is smaller than the first growth rate. More specifically, it is converging to zero growth. The tire growth model may be predetermined or it may be adjusted based on parameters such as driven distance; tire age; forces exerted on the tires. The adjusting of the tire model may occur by virtue of adjusting the (first and/or second) durations or adjusting the (first and/or second) growth rates.

Typical values for the first distance may be comprised in the range of 100 to 1.000 km, more preferably of 500 to 1.000 km. Typical values for the second distance may be comprised in the range of 10.000 to 50.000 km, more preferably of 25.000 to 50.000 km.

Typical values for the first rate may be comprised in the range of 0.1 to 1 % per 100 km . Typical values for the second rate may be comprised in the range of 0.01 to 0.2 % per 10.000 km.

Instead of modeling the tire growth as a function of distance, it may also be modelled as a function of time or as a function of the cumulated forces exerted on the tires (e.g., acceleration, load, etc.), as described above.

Fig. 7 shows an apparatus 70 according to an embodiment. Apparatus 70 includes a processing part 72, which is configured to perform the steps of a method according to the present disclosure, for instance the method 10 of Fig. 1.

Fig. 7 further depicts a first wheel speed sensor 74, which may be attributed to a first wheel or axle. It further depicts a second wheel speed sensor 76 which may be attributed to a second wheel/axle. In another aspect of the present disclosure the apparatus 70, the wheel speed sensor 74 and the wheel speed sensor 76 may form a system for estimating tread wear.

## Claims

1. Method for estimating tread wear of tires on wheels of a vehicle (10), tread wear being indicative of the difference between a starting tread depth and a current tread depth, the method comprising the steps of:

   - obtaining a first angular velocity sensor signal, indicative of an angular velocity of at least one first wheel or a first axle of the vehicle; and
   - obtaining a second angular velocity sensor signal, indicative of an angular velocity of at least one second wheel or a second axle of the vehicle;

   **characterized in that** the method further comprises:

   - determining, based on the obtained first and second angular velocity sensor signals, a tread wear difference value, indicative of the difference in tread wear between the tires at the first and second wheels or axles;
   - estimating, based on the determined tread wear difference value and based on a estimation relationship, a first tread wear estimate for the tire at the first wheel or axle and a second tread wear estimate for the tire at the second wheel or axle.

2. Method according to claim 1, wherein the determining is based on a comparison of the first and second angular velocity sensor signals, optionally corrected for slip at driven wheels or axles.

3. Method according to claim 1 or 2, wherein the determining is based on a formula corresponding to:

$$R\frac{\omega_2 - \omega_1}{(\omega_2 + \omega_1)/2} = K(d_2 - d_1)$$

wherein $d_1$ denotes a tread depth for the tire at the first wheel or axle, $d_2$ denotes a tread depth for the tire at the second wheel or axle, $\omega_1$ denotes an angular velocity of the first wheel or axle of the vehicle, $\omega_2$ denotes an angular velocity of the second wheel or axle of the vehicle, $R$ denotes a default rolling radius, and *K* denotes a proportionality constant.

4. Method according to one of claims 1 to 3, wherein the estimation relationship is a linear relationship.

5. Method according to one of claims 1 to 4, wherein the estimating is based on a relationship corresponding to:

$$C = \frac{d_1}{d_2}$$

wherein $d_1$ denotes a first tire tread depth, $d_2$ denotes a second tire tread depth, and *C* denotes a linearity constant, which is different from 1.

6. Method according to one of claims 1 to 5, wherein the estimation relationship is based on one or more of the following:

   - expected or actual vehicle load, expected or actual vehicle type, drive type; or
   - expected or actual vehicle acceleration.

7. Method according to one of claims 1 to 6, wherein the determining and/or the estimating does not require using one or more of the following:

   - a velocity signal indicative of an absolute speed of the vehicle; or
   - a location signal indicative of a location of the vehicle.

8. Method according to one of claims 1 to 7, wherein

   - the at least one first wheel is or comprises wheels at a driven axle of the vehicle; and
   - the at least one second wheel is or comprises wheels at a non-driven axle of the vehicle.

9. Method according to one of claims 1 to 8, wherein the vehicle is a rear- or front-wheel driven vehicle.

10. Method according to one of claims 1 to 9, wherein the method further comprises outputting a tread wear alarm in response to the estimating when at least one of the first tread wear estimate for the tire of the first wheel and the second tread wear estimate for the tire of the second wheel exceeds a predetermined threshold.

11. Method according to one of claims 1 to 10, wherein the estimating comprises a statistical regression analysis, including a recursive estimation such as a Kalman filter, or a batch analysis such as a least-squares-fit of a relationship between the measured signals.

12. Method according to one of claims 1 to 11, further comprising adjusting the estimated first tread wear estimate based on an expected tire growth of the tire of the first wheel.

13. Method according to claim 12, wherein the adjusting is based on a tire growth model, in particular a growth model having a first phase of a first duration with a first growth rate and a second phase of a second duration with a second growth rate, wherein the second growth rate is smaller than the first growth rate and/or converging to zero growth.

14. Method according to claim 13, wherein the tire growth model is based on one or more of the following: driven distance; tire age; forces exerted on the tires.

15. Computer program product including program code configured to, when executed in a computing device, to carry out the method according to one of the preceding claims.

16. Apparatus for estimating tread wear of tires on wheels of a vehicle (10), tread wear being indicative of the difference between a starting tread depth and current tread depth, the apparatus comprising a processing part configured to carry out the method according to one of claims 1 to 13.

**Patentansprüche**

1. Verfahren zum Schätzen der Profilabnutzung von Reifen auf Rädern eines Fahrzeugs (10), wobei die Profilabnutzung die Differenz zwischen einer Anfangsprofiltiefe und einer aktuellen Profiltiefe angibt, wobei das Verfahren die folgenden Schritte umfasst:

   - Erhalten eines ersten Winkelgeschwindigkeitssensorsignals, das eine Winkelgeschwindigkeit von mindestens einem ersten Rad oder einer ersten Achse des Fahrzeugs anzeigt; und
   - Erhalten eines zweiten Winkelgeschwindigkeitssensorsignals, das eine Winkelgeschwindigkeit von mindestens einem zweiten Rad oder einer zweiten Achse des Fahrzeugs anzeigt;

   **dadurch gekennzeichnet, dass** das Verfahren ferner umfasst:

   - Bestimmen eines Profilabnutzungsdifferenzwertes, auf der Grundlage der erhaltenen ersten und zweiten Winkelgeschwindigkeitssensorsignale, der den Unterschied in der Profilabnutzung zwischen den Reifen an den ersten und zweiten Rädern oder Achsen anzeigt;
- Schätzen, auf der Grundlage des ermittelten Profilabnutzungsdifferenzwertes und auf der Grundlage einer Schätzungsbeziehung, einer ersten Profilabnutzungsschätzung für den Reifen an dem ersten Rad oder der ersten Achse und einer zweiten Profilabnutzungsschätzung für den Reifen an dem zweiten Rad oder der zweiten Achse.

2. Verfahren nach Anspruch 1, wobei das Bestimmen auf einem Vergleich der Signale des ersten und zweiten Winkelgeschwindigkeitssensors basiert, optional korrigiert um den Schlupf an den angetriebenen Rädern oder Achsen.

3. Verfahren nach Anspruch 1 oder 2, wobei das Bestimmen auf einer Formel basiert entsprechend:

$$R \frac{\omega_2 - \omega_1}{(\omega_2 + \omega_1)/2} = K(d_2 - d_1)$$

wobei $d_1$ eine Profiltiefe für den Reifen an dem ersten Rad oder der ersten Achse bezeichnet, $d_2$ eine zweite Profiltiefe für den Reifen an dem zweiten Rad oder der zweiten Achse bezeichnet, $\omega_1$ eine Winkelgeschwindigkeit des ersten Rads oder der ersten Achse des Fahrzeugs bezeichnet, $\omega_2$ eine Winkelgeschwindigkeit des zweiten Rads oder der zweiten Achse des Fahrzeugs bezeichnet, $R$ einen Standard-Rollradius bezeichnet und $K$ eine Proportionalitätskonstante bezeichnet.

4. Verfahren nach einem der Ansprüche 1 bis 3, wobei die Schätzungsbeziehung eine lineare Beziehung ist.

5. Verfahren nach einem der Ansprüche 1 bis 4, wobei die Schätzung auf einer Beziehung basiert, entsprechend:

$$C = \frac{d_1}{d_2}$$

wobei $d_1$ eine erste Reifenprofiltiefe bezeichnet, $d_2$ eine zweite Reifenprofiltiefe bezeichnet und $C$ eine Linearitätskonstante bezeichnet, die von 1 verschieden ist.

6. Verfahren nach einem der Ansprüche 1 bis 5, wobei die Schätzungsbeziehung auf einem oder mehreren der folgenden Punkte beruht:

- erwartete oder tatsächliche Fahrzeuglast, erwarteter oder tatsächlicher Fahrzeugtyp, Antriebstyp; oder
- erwartete oder tatsächliche Fahrzeugbeschleunigung.

7. Verfahren nach einem der Ansprüche 1 bis 6, wobei das Bestimmen und/oder die Schätzung nicht die Verwendung eines oder mehrerer der folgenden Elemente erfordert:

- ein Geschwindigkeitssignal, das eine absolute Geschwindigkeit des Fahrzeugs anzeigt; oder
- ein Ortungssignal, das den Standort des Fahrzeugs anzeigt.

8. Verfahren nach einem der Ansprüche 1 bis 7, wobei

- das mindestens eine erste Rad ist oder umfasst Räder an einer angetriebenen Achse des Fahrzeugs; und
- das mindestens eine zweite Rad ist oder umfasst Räder an einer nicht angetriebenen Achse des Fahrzeugs.

9. Verfahren nach einem der Ansprüche 1 bis 8, wobei das Fahrzeug ein heck- oder frontgetriebenes Fahrzeug ist.

10. Verfahren nach einem der Ansprüche 1 bis 9, wobei das Verfahren ferner umfasst Ausgeben eines Profilabnutzungsalarms in Reaktion auf die Schätzung wenn zumindest eine der ersten Profilabnutzungsschätzung für den Reifen des ersten Rads und der zweiten Profilabnutzungsschätzung für den Reifen des zweiten Rads einen vorbestimmten Grenzwert überschreitet.

11. Verfahren nach einem der Ansprüche 1 bis 10, wobei das Schätzen eine statistische Regressionsanalyse, einschließlich einer rekursiven Schätzung, wie z. B. eines Kalman-Filters, oder eine Stapelanalyse, wie z. B. ein Least-Squares-Fit einer Beziehung zwischen den gemessenen Signalen, umfasst.

12. Verfahren nach einem der Ansprüche 1 bis 11, das ferner die Anpassung der geschätzten ersten Profilabnutzungsschätzung auf der Grundlage eines erwarteten Reifenwachstums des Reifens des ersten Rads umfasst.

13. Verfahren nach Anspruch 12, wobei die Anpassung auf einem Wachstumsmodell basiert, insbesondere ein Wachstumsmodell mit einer ersten Phase einer ersten Dauer mit einer ersten Wachstumsrate und eine zweite Phase einer zweiten Dauer mit einer zweiten Wachstumsrate aufweist, wobei die zweite Wachstumsrate kleiner ist als die erste Wachstumsrate und/oder gegen Nullwachstum konvergiert.

**14.** Verfahren nach Anspruch 13, wobei das Reifenwachstumsmodell auf einem oder mehreren der folgenden Faktoren basiert Fahrstrecke; Reifenalter; auf die Reifen ausgeübte Kräfte.

**15.** Computerprogrammprodukt, das Programmcode enthält, der so konfiguriert ist, dass er, wenn er in einer Computervorrichtung ausgeführt wird, das Verfahren gemäß einem der vorhergehenden Ansprüche ausführt.

**16.** Vorrichtung zum Schätzen der Profilabnutzung von Reifen auf Rädern eines Fahrzeugs (10), wobei die Profilabnutzung die Differenz zwischen einer AnfangsProfiltiefe und der aktuellen Profiltiefe anzeigt, wobei die Vorrichtung ein Verarbeitungsteil umfasst, das dazu eingerichtet ist, das Verfahren gemäß einem der Ansprüche 1 bis 14 auszuführen.

**Revendications**

**1.** Méthode pour estimer l'usure de la bande de roulement de pneus sur des roues d'un véhicule (10), l'usure de la bande de roulement étant indicative de la différence entre une profondeur de bande de roulement initiale et une profondeur de bande de roulement en cours, la méthode comprenant les étapes :

- d'obtention d'un premier signal de capteur de vitesse angulaire, indicatif d'une vitesse angulaire d'au moins une première roue ou d'un premier essieu du véhicule ; et
- d'obtention d'un deuxième signal de capteur de vitesse angulaire, indicatif d'une vitesse angulaire d'au moins une deuxième roue ou d'un deuxième essieu du véhicule ;

**caractérisée en ce que** la méthode comprend en outre :

- la détermination, sur la base des premier et deuxième signaux de capteur de vitesse angulaire obtenus, d'une valeur de différence d'usure de la bande de roulement, indicative de la différence d'usure de la bande de roulement entre les pneus au niveau des première et deuxième roues ou des premier et deuxième essieux ;
- l'estimation, sur la base de la valeur de différence d'usure de la bande de roulement déterminée et sur la base d'une relation d'estimation, d'une première estimation d'usure de la bande de roulement pour le pneu au niveau de la première roue ou du premier essieu et d'une deuxième estimation d'usure de la bande de roulement pour le pneu au niveau de la deuxième roue ou du deuxième essieu.

**2.** Méthode selon la revendication 1, dans laquelle la détermination est basée sur une comparaison des premier et deuxième signaux de capteur de vitesse angulaire, facultativement corrigés pour le patinage au niveau des roues motrices ou essieux moteurs.

**3.** Méthode selon la revendication 1 ou 2, dans laquelle la détermination est basée sur une formule correspondant à :

$$R \frac{\omega_2 - \omega_1}{(\omega_2 + \omega_1)/2} = K(d_2 - d_1)$$

dans laquelle $d_1$ désigne une profondeur de bande de roulement pour le pneu au niveau de la première roue ou du premier essieu, $d_2$ désigne une profondeur de bande de roulement pour le pneu au niveau de la deuxième roue ou du deuxième essieu, $\omega_1$ désigne une vitesse angulaire de la première roue ou du premier essieu du véhicule, $\omega_2$ désigne une vitesse angulaire de la deuxième roue ou du deuxième essieu du véhicule, $R$ désigne un rayon de roulement par défaut, et $K$ désigne une constante de proportionnalité.

**4.** Méthode selon l'une des revendications 1 à 3, dans laquelle la relation d'estimation est une relation linéaire.

**5.** Méthode selon l'une des revendications 1 à 4, dans laquelle l'estimation est basée sur une relation correspondant à :

$$C = \frac{d_1}{d_2}$$

dans laquelle $d_1$ désigne une première profondeur de bande de roulement de pneu, d2 désigne une deuxième profondeur de bande de roulement de pneu, et $C$ désigne une constante de linéarité, qui est différente de 1.

**6.** Méthode selon l'une des revendications 1 à 5, dans laquelle la relation d'estimation est basée sur un ou plusieurs des éléments suivants :

- la charge de véhicule attendue ou réelle, le type de véhicule attendu ou réel, le type de traction ; ou
- l'accélération de véhicule attendue ou réelle.

**7.** Méthode selon l'une des revendications 1 à 6, dans laquelle la détermination et/ou l'estimation ne nécessitent pas l'utilisation d'un ou plusieurs des éléments suivants :

- un signal de vitesse indicatif d'une vitesse absolue du véhicule ; ou
- un signal de localisation indicatif d'une localisation du véhicule.

8. Méthode selon l'une des revendications 1 à 7, dans laquelle

   - l'au moins une première roue est ou comprend des roues au niveau d'un essieu moteur du véhicule ; et
   - l'au moins une deuxième roue est ou comprend des roues au niveau d'un essieu non moteur du véhicule.

9. Méthode selon l'une des revendications 1 à 8, dans laquelle le véhicule est un véhicule à propulsion arrière ou traction avant.

10. Méthode selon l'une des revendications 1 à 9, dans laquelle la méthode comprend en outre l'émission d'une alarme d'usure de la bande de roulement en réponse à l'estimation lorsqu'au moins une parmi la première estimation d'usure de la bande de roulement pour le pneu de la première roue et la deuxième estimation d'usure de la bande de roulement pour le pneu de la deuxième roue dépasse un seuil prédéterminé.

11. Méthode selon l'une des revendications 1 à 10, dans laquelle l'estimation comprend une analyse de régression statistique, incluant une estimation récursive telle qu'un filtre de Kalman, ou une analyse par lots telle qu'une méthode des moindres carrés d'une relation entre les signaux mesurés.

12. Méthode selon l'une des revendications 1 à 11, comprenant en outre l'ajustement de la première estimation d'usure de la bande de roulement estimée sur la base d'une croissance de pneu attendue du pneu de la première roue.

13. Méthode selon la revendication 12, dans laquelle l'ajustement est basé sur un modèle de croissance de pneu, en particulier un modèle de croissance ayant une première phase d'une première durée avec un premier taux de croissance et une deuxième phase d'une deuxième durée avec un deuxième taux de croissance, dans laquelle le deuxième taux de croissance est plus petit que le premier taux de croissance et/ou convergent vers une croissance nulle.

14. Méthode selon la revendication 13, dans laquelle le modèle de croissance de pneu est basé sur un ou plusieurs des éléments suivants :
une distance parcourue ; un âge de pneu ; des forces exercées sur les pneus.

15. Produit-programme d'ordinateur incluant un code de programme configuré pour, lorsqu'il est exécuté dans un dispositif informatique, réaliser la méthode selon l'une des revendications précédentes.

16. Appareil pour estimer l'usure de la bande de roulement de pneus sur des roues d'un véhicule (10), l'usure de la bande de roulement étant indicative de la différence entre une profondeur de bande de roulement initiale et une profondeur de bande de roulement en cours, l'appareil comprenant une partie de traitement configurée pour réaliser la méthode selon l'une des revendications 1 à 13.

10

12 — Obtaining
first angular
velocity

Obtaining
second angular
velocity — 14

16 — Determining tread wear
difference

18 — Estimating tread wear estimate

FIG. 1

FIG. 2A

FIG. 2B

FIG. 3

40

Wear for a typical FWD car

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015208270 A1